# EUROPÄISCHE PATENTSCHRIFT

(11) **EP 0 455 988 B1**
(45) Veröffentlichungstag und Bekanntmachung des Hinweises auf die Patenterteilung: **06.10.1993**
(21) Anmeldenummer: 91105381.7
(22) Anmeldetag: 05.04.1991
(51) Int. Cl.: B30B 15/00, F16F 15/26

(54) **Vorrichtung zum Massenausgleich bei Stanzmaschinen**
Apparatus for balancing the inertia forces in a punching machine
Dispositif pour l'équilibrage des forces inertielles dans une machine à poinçonner

(30) Priorität: 09.05.1990 CH 1571/90
(43) Veröffentlichungstag der Anmeldung: 13.11.1991
(73) Patentinhaber: BRUDERER AG, CH-9320 Frasnacht (CH)
(72) Erfinder: Eigenmann, Oskar, CH-9320 Arbon (CH)
(74) Vertreter: Blum, Rudolf Emil Ernst

(56) Entgegenhaltungen:
- EP-A- 0 077 634
- DE-A- 1 576 245
- GB-A- 141 118
- GB-A- 1 151 249
- GB-A- 2 090 189
- GB-A- 2 189 730

## Beschreibung

Die vorliegende Erfindung betrifft eine Vorrichtung zum Massenausgleich bei Stanzmaschinen, mit einer Ausgleichseinrichtung zum Ausgleich der oszillierenden Kräfte, welche über Zwischenglieder mit einer unmittelbar auf der Kurbel- bzw. Exzenterwelle gelagerten Ausgleichseinrichtung zum Ausgleich der rotierenden Kräfte antriebsverbunden ist.

Eine solche Massenausgleichsvorrichtung ist z.B. in der GB-A-2 189 730 offenbart. Dabei ist das Ausgleichsgewicht zum Ausgleichen der oszillierenden Kräfte durch Führungsglieder vertikal geführt. Es besteht nun die Möglichkeit, dass bei Maschinen mit grösseren Dimensionen Schwierigkeiten bei den zur vertikalen Führung dienenden Bauteilen auftreten, welche auf thermisch bedingten Ausdehnungen beruhen.

Weiter ist in der GB-A-141 118 eine Massenausgleichsvorrichtung beschrieben, bei der die Ausgleichsgewichte zum Ausgleich der oszillierenden Kräfte bei den einander zugekehrten Bereichen an einem stationären Teil der Vorrichtung angelenkt sind. Auch hier treten im Fall von grösseren Abmessungen thermisch bedingte Schwierigkeiten auf.

Hier will die Erfindung Abhilfe schaffen. Die Erfindung, wie sie in den Ansprüchen gekennzeichnet ist, löst die Aufgabe, eine Vorrichtung zum Massenausgleich bei Stanzmaschinen zu schaffen, bei welcher die einander zugekehrten Enden der Ausgleichsgewichte einander in vertikaler Richtung führen.

Die durch die Erfindung erreichten Vorteile sind im wesentlichen darin zu sehen, dass keine mit dem Maschinenrahmen verbundene Führungsglieder zur Vertikalführung dieser Enden der Ausgleichsgewichte vorhanden sind, welche im Betrieb aufgrund von thermischen Ausdehnungen im Falle grösserer Dimensionen zu Schwierigkeiten führen können.

Im folgenden wird die Erfindung anhand von lediglich einen Ausführungsweg darstellenden Zeichnungen näher erläutert.

Es zeigt :
Figur 1 einen Vertikalschnitt, in dem eine Ausführung der Erfindung dargestellt ist, und
Figur 2 einen Schnitt entlang der Linie II-II der Figur 1.

Im Maschinengehäuse 7 ist eine Kurbel- bzw. Exzenterwelle 5 gelagert. Diese treibt abhängig von der jeweiligen Ausführung einen oder mehrere Stanzpleuel 11, der bzw. die in bekannter Weise am Stössel 12 der Stanzmaschine angelenkt ist bzw. sind. Weiter ist auf der Exzenterwelle 5 über Wälzlager 13 das Joch 6 gelagert. Dieses dient zum Ausgleich der rotierenden Kräfte. An beiden seitlichen Enden des Jochs 6 ist jeweils ein als Lenker ausgebildetes Zwischenglied 3,4 angelenkt. Diese Zwischenglieder 3,4 sind ihrerseits an Ausgleichsgewichten 1,2 angelenkt, welche Ausgleichsgewichte 1,2 zum Ausgleich der oszillierenden Kräfte dienen.

Es ist also ersichtlich, dass im Betrieb das Joch 6, welches die rotierenden Kräfte ausgleicht, über die Lenker 3,4 die Ausgleichsgewichte 1,2 zum Ausgleich der oszillierenden Kräfte antreibt.

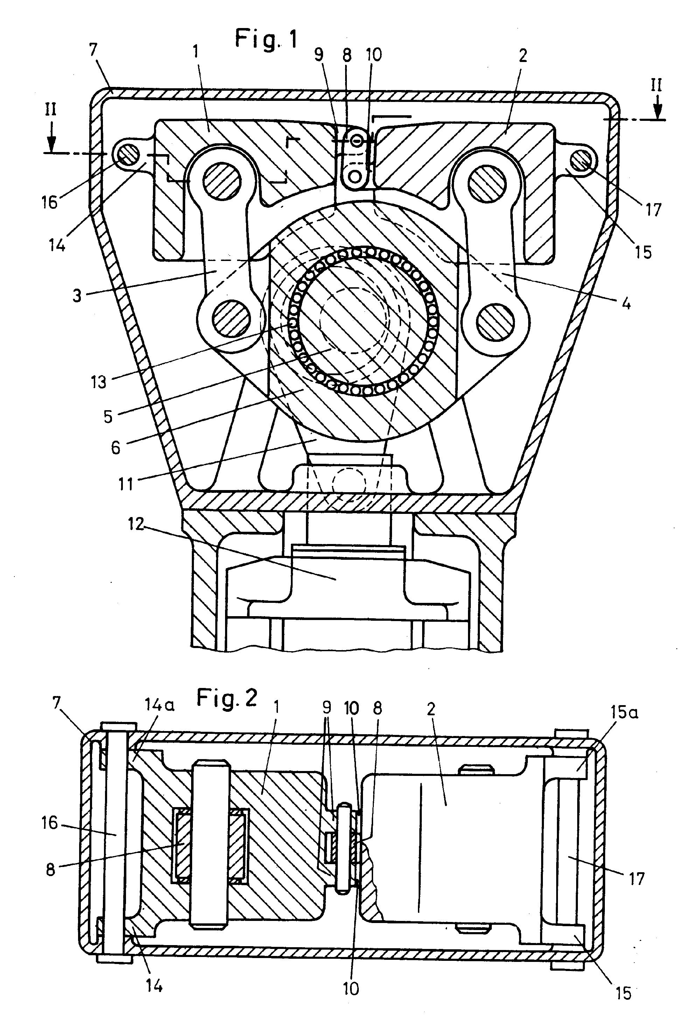

Diese Ausgleichsgewichte 1,2 sind, wie aus den Zeichnungen hervorgeht, relativ zur Vertikalebene durch die Rotationsachse der Exzenterwelle 5 symmetrisch ausgebildet. Die einander zugekehrten Enden der Ausgleichsgewichte 1,2 weisen jeweils zwei Lageraugen 9,10 auf (siehe auch Figur 2). Diese Lageraugen überlappen einander und sind über ein Schwenkglied aneinander angelenkt. Aus der Figur 2 geht hervor, dass dieses Schwenkglied 8 vertikal zwischen den Lageraugen 9,10 verläuft und bei jeweils einem Ende der Lageraugen 9,10 angelenkt ist. Bei den von den Lageraugen 9,10 abgekehrten Enden weisen die Ausgleichsgewichte 1,2 jeweils Fortsätze 14, 14a und 15,15a auf. Diese Fortsätze sind auf Wellen 16,17 gelagert, welche ihrerseits im Maschinengehäuse 7 gelagert sind.

Die zwei Ausgleichsgewichte 1,2 werden also im Betrieb durch die Lenker 3,4 um die Wellen 16,17 auf- und abwärts geschwenkt, womit der Ausgleich der oszillierenden Kräfte stattfindet. Offensichtlich findet im Betrieb eine Aenderung des horizontalen Abstandes bei den Lageraugen 9,10 der Ausgleichsgewichte 1,2 aufgrund des von denselben durchlaufenden Kreisbogenabschnittes statt. Diese kleine Aenderung wird durch das Schwenkglied 8, welches sich entsprechend schrägstellt, aufgenommen.

Dadurch, dass zwei Ausgleichsgewichte 1,2 zum Ausgleichen der oszillierenden Kräfte vorhanden sind, die einerends am Maschinengehäuse 7 und anderends über das Schwenkglied 8 aneinander angelenkt sind, entfällt die bis anhin notwendig gewesene Vertikalführung.

Es ist zu bemerken, dass die gegenseitige Vertikalführung der Ausgleichsgewichte 1,2 mittels dem Schwenkglied 8 nur eine von verschiedenen Ausführungen ist. Es sind z.B. auch Ausführungen vorgesehen, bei denen die Ausgleichsgewichte 1,2 bei den einander zugekehrten Enden über z.B. Zahnsegmente miteinander kämmen oder über Stahlbänder zur Führung in der vertikalen Richtung miteinander in Verbindung stehen.

## Patentansprüche

1. Vorrichtung zum Massenausgleich bei Stanzmaschinen, mit einer Ausgleichsvorrichtung (1, 2) zum Ausgleich der oszillierenden Kräfte, welche über Zwischenglieder (3, 4) mit einer unmittelbar auf der Kurbel- bzw. Exzenterwelle (5) gelagerten Ausgleichsgewichtseinrichtung (6) zum Ausgleich der rotierenden Kräfte antriebsverbunden ist, welche Ausgleichsgewichtseinrichtung zum Ausgleich der oszillierenden Kräfte Ausgleichsgewichte (1, 2) aufweist, die relativ zur die Rotationsachse der Kurbel- bzw. Exzenterwelle (5) enthaltenden Vertikalebene einander symmetrisch gegenüberliegend angeordnet sind, bei ersten Bereichen am Maschinengehäuse (7) und bei jeweils einer davon entfernten Stelle über als Lenker ausgebildete Zwischenglieder (3, 4) an der Ausgleichsgewichtseinrichtung (6) zum Ausgleich der rotierenden Kräfte angelenkt sind, und welche Ausgleichsgewichte (1, 2) zweite, von den ersten entfernte, einander zugekehrte und eine Schwenkbewegung ausführende Bereiche aufweisen, dadurch gekennzeichnet, dass die zweiten Bereiche der Ausgleichsgewichte (1, 2) jeweils zwei abstehende Lageraugen (9, 10) aufweisen, welche Lageraugen (9, 10) einander überlappen und über ein Schwenkglied (8) aneinander angelenkt sind, welches Schwenkglied (8) zwischen den sich überlappenden Lageraugen (9, 10) vertikal angeordnet und bei zwei einen gegenseitigen Abstand aufweisenden Stellen an einem jeweiligen Lageraugenpaar (9, 10) angelenkt ist, derart, dass sich die Ausgleichsgewichte bei den zweiten Bereichen in Richtung der vertikalen Bewegungskomponente der Schwenkbewegung gegenseitig führen.

2. Vorrichtung nach Patentanspruch 1, dadurch gekennzeichnet, dass die Ausgleichsgewichte (1, 2) bei von den Lageraugen (9, 10) abgekehrten Stellen am Maschinengehäuse (7) und zwischen diesen Stellen und den Lageraugen (9, 10) über jeweils das Zwischenglied (3, 4) bildende Lenker an dem Joch (6) angelenkt sind.

## Claims

1. Apparatus for the mass balancing at punch presses, having a means (1, 2) for the balancing of the oscillating forces, which are drivingly connected, via intermediate members (3, 4) with a force balancing means (6) for the balancing of the rotating forces supported directly on the crank- or eccentric, resp., shaft (5), which force balancing means for the balancing of the oscillating forces includes balancing weights (1, 2), which are located relative to the vertical plane which includes the axis of rotation of the crank- or eccentric, resp., shaft (5) symmetrically opposite of each other, are pivotally connected at first areas to the machine frame (7) and by respective locations distant therefrom via intermediate members (3, 4) designed as links to the weight balancing means (6) for the balancing of the rotating forces, and which balancing weights (1, 2) include second areas remote from the first ones, facing each other and performing a pivoting movement, characterized in that the second areas of the balancing weights (1, 2) include each two projecting bearing eyelets (9, 10), which bearing eyelets (9, 10) overlap each other and are pivotably connected to each other via a pivot member (8), which pivot member (8) is vertically arranged between the overlapping bearing eyelets (9, 10) and is pivotably mounted at two locations located at a mutual distance from each other at a respective pair of eyelets (9, 10), whereby the balancing weights guide each other mutually at the second locations in the direction of the vertical component of the movement of the pivoting movement.

2. Apparatus according to claim 1, characterized in that the balancing weights (1, 2) are pivotably mounted at locations opposite of the bearing eyelets (9, 10) to the machine frame (7) and between these locations and the bearing eyelets (9, 10) via respective links forming the intermediate member (3, 4) to the yoke (6).

## Revendications

1. Dispositif pour l'équilibrage des masses dans des machines à poinçonner, comprenant, pour l'équilibrage des forces oscillantes, un dispositif d'équilibrage (1, 2) qui est relié cinématiquement, par des éléments intermédiaires (3, 4), à un système de contrepoids d'équilibrage (6) monté directement sur le vilebrequin ou l'arbre à excentrique (5) pour l'équilibrage des forces rotatives, lequel dispositif d'équilibrage présente, pour l'équilibrage des forces oscillantes, des contrepoids d'équilibrage (1, 2) qui sont disposés en face l'un de l'autre, symétriquement par rapport au plan vertical contenant l'axe de rotation du vilebrequin ou de l'arbre à excentrique (5), et qui s'articulent par des premières parties sur le bâti (7) de la machine et, en des points situés respectivement à distance de ces premières parties, chacun par l'un des éléments intermédiaires (3, 4) réalisés sous forme de bielles d'accouplement, sur le système de contrepoids d'équilibrage (6) prévu pour l'équilibrage des forces rotatives, ces contrepoids d'équilibrage (1, 2) présentant, à distance des premières parties, des secondes parties qui sont dirigées l'une vers l'autre et qui effectuent un mouvement oscillant, caractérisé en ce que les secondes parties des contrepoids d'équibrage (1, 2) présentent chacune deux oreilles-paliers distantes (9, 10), lesquelles oreilles-paliers (9, 10) se superposent et sont articulées entre elles au moyen d'un élément pivotant (8), lequel élément pivotant (8) est disposé verticalement entre les oreilles-paliers (9, 10) qui se superposent, et est articulé sur chaque paire d'oreilles-paliers (9, 10) en deux points situés à distance l'un de l'autre, de telle sorte qu'au niveau de leurs secondes parties, les contrepoids d'équilibrage se guident mutuellement dans la direction de la composante verticale du mouvement oscillant.

2. Dispositif selon la revendication 1, caractérisé en ce que les contrepoids d'équilibrage (1, 2) sont articulés sur le bâti (7) de la machine en des points situés à l'opposé des oreilles-paliers (9, 10) et sont articulés sur le joug (6), entre ces points et les oreilles-paliers (9, 10), au moyen de bielles d'accouplement respectives constituant les éléments intermédiaires (3, 4).
